Europäisches Patentamt

European Patent Office

Office européen des brevets

(19)

(11) Publication number: **0 063 468**

**A2**

(12) # EUROPEAN PATENT APPLICATION

(21) Application number: **82301931.0**

(22) Date of filing: **14.04.82**

(51) Int. Cl.³: **C 11 C 3/00**
//A21D2/16

(30) Priority: **20.04.81 US 255736**

(43) Date of publication of application:
**27.10.82 Bulletin 82/43**

(84) Designated Contracting States:
**BE DE GB NL SE**

(71) Applicant: **C.J. Patterson Company**
**3947 Broadway**
**Kansas City Missouri 64111(US)**

(72) Inventor: **Rusch, David T.**
**9837 Pawnee**
**Overland Park Kansas 66202(US)**

(72) Inventor: **France, James R.**
**10100 W. 99th Terrace**
**Overland Park Kansas 66111(US)**

(72) Inventor: **Davis, Eric W.**
**4923 Fisk**
**Parkville Missouri 64152(US)**

(72) Inventor: **Tenney, Ralph J.**
**Route 1 S-42**
**Lake Lotawana Missouri 64063(US)**

(74) Representative: **Huskisson, Frank Mackie et al,**
**Fitzpatricks 48 St. Vincent Street**
**Glasgow, G2 5TT Scotland(GB)**

(54) High solids monoglyceride hydrate.

(57) A high solids distilled monoglyceride hydrate composition for use as a food additive is disclosed along with a process for preparing the same wherein the product may be supplied to users at solids levels not heretofore practical because the monoglyceride compositions did not retain their functionality at those high solids levels. A finely beaded, particulate monoglyceride composition having an iodine value of from about 5 to about 32 is stirred with water at a temperature below the melting point of the monoglyceride composition to form a paste. The amount of water introduced is correlated with the quantity of monoglyceride composition to cause the final product to have from about 40% to about 60% by weight of solids with about 56% being preferred. The resulting product is just as functional in additive applications such as yeast leavened wheat flour based foods as lower solids levels monoglyceride hydrates. As a consequence, the distilled monoglyceride hydrate product is less costly for the consumer by virtue of significantly lower shipping costs in relationship to functional results obtained and less product for bakers to weigh and inventory.

**0063468**

# HIGH SOLIDS MONOGLYCERIDE HYDRATE

## Background of the Invention

This invention relates to hydrated, distilled monoglyceride products which may be supplied and used at higher solids to water ratios than heretofore possible while retaining the same degree of functionality in food additive applications as hydrated monoglyceride compositions having lower solids levels. As a result, shipping costs for the product based on active ingredients are significantly less than with lower solids distilled monoglyceride hydrate compositions.

When edible fats and/or fat derived fatty acids are esterified with glycerol, a mixture of mono, di and triglycerides of the fatty acid moieties are obtained along with minor quantities of free glycerol, water and free fatty acids. Commercial monoglyceride compositions have usually contained 35 to 65% monoester with the balance primarily consisting of diglycerides and a smaller amount of triglycerides. Since the 1 and 2 monoglycerides are the active components in the mixture, it is desirable to limit the di and tri glyceride content of the additive product. Furthermore, by virtue of the fact that the 1-monoglyceride is the most active of the components and is present in substantially greater proportions than the 2-isomer, distillation techniques have been developed and long used to prepare distilled monoglyceride compositions containing in excess of 85% monoglycerides, principally in the 1-monoglyceride form. The monoglyceride is prepared by passing the crude mixture through a distillation unit as a thin film which is exposed to a temperature of 350° F. - 400° F. under a vacuum of the order of 1/1000 mm Hg. The monoglycerides evaporate from the film under these conditions allowing them to separate from all but 2% - 4% of the di and triglycerides and traces of free fatty acids, moisture and glycerol.

Distilled monoglycerides have widespread utility in the food additive field because of their purity and specific functional properties as food improving products. Because of the hydrophilic free hydroxyl groups in the glycerol part of the monoglyceride molecule, and the lipophilic fatty acid part of the monoglyceride, the material is surface active and thus functions as a surfactant, which stabilizes emulsions in food ingredients, improves the texture and volume of cakes and improves the crumb softness of bread.

The crumb softening effect of distilled monoglycerides is believed to be attributable to an interaction between the monoglycerides and amylose, the water soluble part of the starch fraction in wheat flour. Wheat starch contains about 20% amylose, which during the dough mixing stage and the baking process partially escapes from the starch granules and forms upon baking and cooling a relatively firm gel between the swollen starch granules in the bread. Monoglycerides when present in hydrated form adsorb onto the surface of the starch granules during dough mixing and then complex with the starch, both inside and outside of the granules during baking of the bread to minimize the gel formation, particularly outside the swollen starch granules, thus producing a softer crumb structure in the final baked product.

- 3 -    0063468

Monoglycerides are generally prepared from fatty acids having 14 to 20 carbon atoms as found in raw materials such as lard, beef tallow, soybean oil, corn oil, cottonseed oil, safflower oil and palm oil.  A predominantly saturated distilled monoglyceride has an iodine value (I.V.) in the range of from near 0 to about 5 (usually less than 3) while a predominantly unsaturated distilled monoglyceride has an iodine value in the range of about 50 to about 125.  The ratio of saturated to unsaturated constituents may be varied depending on the nature of the product sought with it being reported that the saturated monoglycerides are the more functional components but they tend to be  hard, insoluble compositions that are difficult to incorporate in the bread dough or other food ingredients.

Many bakers prefer to use monoglyceride hydrates instead of the powder form of the distilled monoglycerides because of the fact that the monoglycerides are more homogenously distributed in the dough during mixing, and when the dough is heated in the oven to above 130° F., the larger specific surface of the stable crystals of monoglyceride in a hydrate provides a faster transformation into the liquid crystalline lamellar state, which is the optimum condition for reactions with free amylose in the aqueous phase.  The rate of reaction between monoglycerides and amylose in starch containing foods is thus dependant on the surface area of the monoglyceride particles which are present in the product.  The specific surface area of the monoglycerides in the hydrate is believed to be nearly 700 times greater than that found in a typical spray congealed powdered product.

## Brief Description of the Prior Art

Most distilled monoglycerides heretofore available for commercial use as bread dough additives for example have been furnished as either a beaded or fine powder, a firm plastic or as a water paste (hydrate). In the case of hydrated products, they have contained up to about 28% by weight of monoglycerides solids. Although plastic, powdered or beaded monoglycerides have had some commercial acceptance, substantial demand has existed and continues to exist for paste-like, hydrated products because of their enhanced functionality in bakery products and other foods. Bakers and other users are familiar with such products, know the results to be expected therefrom and possess the equipment and operating procedures for handling the same. However, shipping costs have been inordinately high as compared with dry distilled monoglycerides because of the water present in the hydrated composition. Heretofore, it has not been commercially acceptable to provide more than about 28% by weight (and usually no more than about 25% by weight) of solids in the composition because of a decrease in functionality of the material as the solids content is raised above the about 28% solids threshold. The reasons for decreased functionality are incompletely understood but are believed to be related to lower hydration levels as the solids content is increased.

For example, in one process as practiced commercially by the assignee of this application, a hydrated monoglyceride in paste form was prepared by heating the distilled monoglyceride above its melting point and raising a quantity of water to the same temperature whereupon the water was incorporated into the molten monoglyceride composition with stirring to produce a homogeneous dispersion. A relatively stable, white plastic mass formed when the material had been allowed to cool to essentially room temperature was ready for packaging and use. Experience with the product had shown that the solids content could not exceed about 28% by weight (usually no more than about 22-25%) for maximum functionality of the hydrated monoglycerides.

In U.S. Patent No. 3,379,535, a distilled monoglyceride composition having a monoglyceride content exceeding about 85% by weight and manufactured from fully hydrogenated lard (Myverol 18-00, Example 1) is described as having been melted at a temperature of 180° F. Water at 130° F. was added to the molten monoglyceride material and the mixture subjected to mixing in a high shear mixer. Phase transition to gel form was said to occur at 137° F. with the dispersion shifting from a very viscous liquid to a creamy like consistency accompanied by a color change. The composition was next passed through a homogenizer and then cooled in a swept surface heat exhcanger producing a final product of non-pourable, plastic consistency containing particles in the range of 1 to 10 microns.

Aktieselskabet Grindstedvaerket, Aarhus, Denmark markets high mono distilled monoglycerides under the trademark Dimodan P and has suggested that their product may be hydrated by the user immediately before use. It is recommended that 25 parts by weight of powdered Dimodan P be combined with 74 parts by weight of water and 1 part by weight of acetic or propionic acid as a preservative. The Dimodan P is first slowly dispersed by slow addition and with stirring in water heated to a temperature of 155° F. The temperature of the mixture should be kept at 140° F. to 150° F. until the Dimodan P is completely dispersed. It is indicated that this should be mixed until completely homogeneous without lumps, although it will not be translucent or liquid as such. The acid is then added and the product cooled. It is indicated that "Cooling can be carried out in various ways, and since the final consistency of the product is controlled by the cooling procedure, it is important that this be performed correctly. ... The right cooling rate and plastification of the product depend on the apparatus used, and, consequently no exact methods can be given. The best method can be found only by experiments with the available apparatus." (Bulletin TM 338E, Grindstedvaerpet)

Another related although not directly relevant product and process is described in U.S. Patent No. 3,388,999.

## Description of the Preferred Embodiment

In accordance with this invention, it has now been discovered that unexpectedly high solids levels (40% to 60% by weight) may be provided in hydrated distilled monoglyceride compositions which will readily disperse in food products such as wheat flour based leavened doughs and batters and the like, without loss in functional activity such as crumb softening properties as compared with distilled monoglyceride hydrates having significantly lower solids levels.

The preferred distilled monoglyceride has a typical monoester content of at least 85% by weight, a 1.5% by weight or less free glycerine level, no more than about 1.5% by weight of free fatty acid, and a melting range of 135° F. to 165° F. The material should be in finely divided particulate form (usually tiny beads or thin flakes where 99% of the particles will pass through a 4 mesh screen. The preferred distilled monoglyceride has an iodine value of 22 ± 6 and especially 22 ± 2.

The particulate monoglyceride is placed in a conventional agitator mixing vessel along with the formula water and other minor ingredients such as preservatives, and thoroughly mixed until a smooth paste is formed. Preferably the product from the mixture is thereafter allowed to equilibrate and further absorb water (hydrate) by standing for 3 to 7 days before use.

It is to be noted that in the foregoing procedure the monoglyceride at room temperature is introduced into the mixing vessel and the water added is also at room temperature. No external heat is required. The amount of water introduced is dependent on the solids content desired for the final paste monoglyceride composition. On a weight basis, the preferred formulation contains 56% by weight distilled monoglyceride. The range of solids to water is by weight 40% to 60% distilled monoglyceride solids and 60% to 40% water. Better results are obtained if the ratio of distilled monoglyceride solids to liquid are maintained in the range of 50% to 58% by weight of distilled monoglyceride solids with a corresponding amount of water to equal 100%.

Although the preferred processing parameters involve no addition of heat to the system before and during mixing, it has been determined that satisfactory although not optimum results can be obtained if heating of the water is limited to a level not exceeding about 130° F. and mixing is carried out in a manner that the mixture never exceeds a level of about 130° F. The lower temperature limit is that at which the water remains liquid for admixture purposes.

Monoglyceride materials of varying iodine values are useful although the preferred composition has an I.V. of 22 ± 6 and especially 22 ± 2 because of the relationship of activity to hydratability at that I.V. level, best results are obtained as to both properties. However, good results can be obtained with monoglycerides having iodine values within the range of about 5 to about 32 and better results in the range of about 10 to about 29.

Various preservative or mold inhibiting agents may be introduced into the composition without affecting its functional properties. Exemplary mold inhibitors are acetic acid, propionic acid, sorbic acid, lactic acid, phosphoric acid and hydrochloric acid. Usually the acid is added in an amount of about 0.5% to about 3% by weight of the formulation.

Similarly, co-emulsification agents may be included in the hydrated monoglyceride composition without decreasing its functionality to a significant extent. For instance, from about 1% to about 5% by weight of a co-emulsifier such as ethoxylated monoglycerides, diacetyl tartaric acid esters of monoglycerides, sodium stearoyl lactylate, polysorbate 60, succinylated monoglyceride, or lecithin may be added if desired. Furthermore, other materials such as hardened fats or commercial monoglycerides, whey solids, propylene glycol, and similar carriers and diluents may be included at levels of about 1% to about 15% as part of the distilled monoglyceride without appreciable effect on finished hydrate properties other than that normally contributed by the materials. For instance, 10% hardened soy oil may be added to the distilled monoglyceride prior to spray chilling to improve formation of the beads and to maintain a lump free product until hydrated.

For the purpose of evaluating the hydrates of this invention as compared with other hydrate products, tests were conducted using the hydrate preparation processes detailed hereunder:

Process I - A distilled monoglyceride of desired I.V. level was melted to approximately 5° F. above its melt point and water heated to the same temperature added to the molten monoglyceride (any acid or co-emulsifier used in the formulation was dissolved in the water) with stirring that was continued while the mixture was allowed to cool to about 100° F. to 110° F. A white, stable plastic mass was obtained having solids level dependent on the amount of water added as indicated in the specific examples set forth hereinafter.

Process II - Beaded distilled monoglyceride material of desired I.V. was placed in a suitable mixing vessel. Approximately 50% of the formula water was added (sufficient to make a thick paste) and the monoglyceride and water thoroughly mixed. The remainder of the formula water and any acid or co-emulsifier to be included therewith was added and mixing continued until a smooth product was formed. (For test and comparitive purposes only, the water added was preheated to specified levels in certain instances as indicated in the examples hereunder.)

## EXAMPLE I
### Baking Evaluation of Hydrates

| Composition | Level%* | Loaf Volume, c.c. | Crumb Compressibility | Quality Score |
|---|---|---|---|---|
| A | 0.44 | 2832 | 154 | 84.3 |
| B | 0.44 | 2887 | 152 | 84.3 |
| C | 0.44 | 2888 | 151 | 84.7 |
| D | 0.44 | 2867 | 150 | 34.5 |
| E | 0.375 | 2896 | 168 | 84.5 |
| F | 1.0 | 2904 | 168 | 84.5 |
| G | No Add. | 2846 | 134 | 84.0 |

* based on flour weight as 100%.

A. Distilled monoglycerides (90% + monoester), I.V. 2; hydrate prepared by Process I. 50% solids.

B. Distilled monoglycerides (90% + monoester) blended to I.V. 20; hydrate prepared by Process I, 50% solids.

C. Distilled monoglycerides (90% + monoester) blended to I.V. 30; hydrate prepared by Process I, 50% solids.

D. Distilled monoglycerides (90% + monoester) blended to I.V. 40; hydrate prepared by Process I, 50% solids.

E. Distilled monoglycerides (90% + monoester) blended to I.V. 27; hydrate prepared by Process II, 56% solids.

F. Commercial hydrated distilled monoglycerides (90% + monoester), 22% solids. (Prepared by Process I.)

## EXAMPLE II
### Baking Evaluation of High Solids Hydrate (HSH) as Compared with Commercial Hydrate (CH)

| Product | Level* | Solids Level* | Loaf Volume, c.c. | Crumb Compressibility | Quality Score |
|---|---|---|---|---|---|
| HSH | 0.125 | 0.07 | 2982 | 157 | 84.7 |
| HSH | 0.25 | 0.14 | 2850 | 165 | 84.5 |
| HSH | 0.3125 | 0.175 | 2821 | 174 | 84.5 |
| HSH | 0.375 | 0.21 | 2892 | 183 | 84.7 |
| CH | 0.3125 | 0.07 | 2829 | 157 | 84.3 |
| CH | 0.64 | 0.14 | 2879 | 164 | 84.7 |
| CH | 0.80 | 0.175 | 2904 | 174 | 84.8 |
| CH | 0.95 | 0.21 | 2867 | 185 | 84.8 |
| No Add. | 0 | 0 | 2850 | 147 | 84.3 |

* based on flour weight as 100%

HSH prepared from distilled monoglycerides (90% + monoester) blended to I.V. 27, by Process II, 56% solids.

CH Commercial hydrated distilled monoglycerides (90% + monoester), 22% solids. (Prepared by Process I.)

## EXAMPLE III
### Monoglyceride Hydrates Prepared According to Process II and Containing 56% Solids (Except as Noted in Comments on Preparation)

Acidic Mold
Inhibitors Added

| | |
|---|---|
| 1% Lactic Acid<br>2% " "<br>3% " "<br>1% Propionic Acid<br>2% " "<br>3% " "<br>1% Acetic Acid<br>2% " "<br>3% " " | Stable at room temperature for more than one month. Stable at 120° F. storage for one month. Freeze-thaw stable for 5 cycles. No mold development. |
| 1% Phosphoric Acid<br>2% " "<br>3% " "<br>1% Hydrochloric Acid<br>2% " "<br>3% " " | Stable at room temperature for more than one month. Separated at 120° F. storage in less than 1 week. Freeze-thaw stable for 5 cycles. No mold development. |

| No acid control | Mold growth developed in less than 1 week at 120° F. |
| Iodine Value 2 | Did not form homogeneous mass, separated. |
| Iodine Value 10<br>"    " 18<br>"    " 20<br>"    " 25<br>"    " 27 | Stable at room temperature for more than one month. Stable at 120° F. storage for more than one month. Freeze-thaw stable for 5 cycles. Products became softer as I.V. increased, penetrometer values after 7 days were: for I.V. 18, 137; I.V. 20, 169; I.V. 25, 170; I.V. 27, 207. |
| Iodine Value 31 | Product relatively sticky during preparation and somewhat difficult to handle. |
| Iodine Value 35 | Product did not form homogenous mass, separated. |

Temperature of water
Added to Monoglyceride
Composition

| 35° F.<br>45° F.<br>70° F.<br>130° F. | Stable at room temperature for more than one month. Stable at 120° F. storage for more than one month. Freeze-thaw stable for 5 cycles. |
| 140° F. | Did not form homogenous mass. |
| 165° F. | Formed gel (at this temperature preparation method becomes similar to Process I). |

## EXAMPLE IV

Distilled monoglycerides prepared from animal fat, from vegetable fat, and from a mixture of animal fat and vegetable fat respectively (all having an I.V. 22 ± 6, M.P. 145° F. to 165° F., and in powdered, beaded form, 99% + through 4 mesh screen) were hydrated in accordance with Process II. Propionic acid at a level of 1% was included as a preservative. They were all found to be stable at 120° F. storage for more than one month and freeze-thaw stable for 5 cycles.

## EXAMPLE V

A commercial product containing 90% distilled monoglycerides and 10% fully hydrogenated fat having an I.V. of 18, a monoester content of 82%, melting point of 145° F. and in powdered, beaded form, (99% + through 4 mesh screen) was hydrated in accordance with Process II. Propionic acid at a level of 1% was included as a preservative. The hydrate was found to be stable at both room temperature and 120° F. for more than one month and freeze-thaw stable for 5 cycles.

EXAMPLE VI

Distilled monoglyceride compositions of specified I.V. values as set forth hereunder and each having a 90% + monoester content and initially in beaded form (99% + through 4 mesh screen) were hydrated in accordance with Process II using formula water to give solids levels as indicated on a weight basis:

| | | |
|---|---|---|
| Monoglyceride solids level (I.V. 22 ± 6) | - 65% | Dry and crumbly, would not mix easily |
| Monoglyceride solids level (I.V. 22 ± 6) | - 60% | Satisfactory but tended to be somewhat on dry side |
| Monoglyceride solids level | - 56% | Stable at 120° F. storage for one month. Freeze-thaw stable for 5 cycles. Products became somewhat softer as water level was increased. |
| | - 50% | |
| | - 45% | |
| (In all instances I.V.22±6) | | |
| Monoglyceride solids level (I.V. 18 ± 2) | - 40% | Stable at 120° F. for one month; Freeze-thaw stable for 5 cycles |
| Monoglyceride solids level (I.V. 22 ± 6) | - 40% | Did not form homogeneous mass, separated |
| | - 35% | |
| Monoglyceride solids level (I.V. 18 ± 2) | - 35% | Did not form homogeneous mass, separated |

EXAMPLE VII

Co-emulsifiers were added to the HSH product described in preceding examples during hydration thereof pursuant to Process II.

| Co-emulsifier | % by Weight | Results |
|---|---|---|
| Sodium Stearoyl lactylate | 2.5 | Stable at room temperature for |
| Ethoxylated mono-glycerides | 2.5 | more than one month. Stable at 120° F. |
| Lecithin | 2.5 | Storage for more than one month. Freeze-thaw stable for 5 cycles. |

EXAMPLE VIII

Penetrometer Values:

Within the preferred ranges of solids and
iodine values the hydrated products prepared in
accordance with Process II were pourable pastes
immediately after preparation, 24 hours later pene-
trometer values were typically 250 to 300 units, 1
to 2 weeks later penetrometer values were typically
175 to 210 units. The increasing viscosity of the
hydrated product (as shown by penetrometer values)
demonstrates further absorbtion of water as
equilibration occurs with time.

## Claims

1. A method of preparing a distilled monoglyceride hydrate product having a high distilled monoglyceride solids content without significantly affecting its functionality as a food additive comprising the steps of:

    providing a quantity of a distilled monoglyceride composition in particulate form and having an iodine value in the range of about 5 to about 32; and

    mixing therewith a sufficient quantity of water and agitating the mixture to an extent, while maintaining the temperature thereof below the melting point to obtain a paste,

the amount of water added being limited to that providing from about 40% to about 60% by weight distilled monoglyceride solids in the final product and the iodine value being correlated with the solids level to produce a stable paste when stored at or below 120° F.

2. A method as set forth in Claim 1 wherein is included the step of adding up to about 15% by weight of a hydrogenated fat to the mixture.

3. A method as set forth in Claim 1 wherein said water is added to the monoglyceride material and the mixture is agitated at a temperature below about 130° F.

4. A method as set forth in Claim 1 wherein said water is added to the monoglyceride material and the mixture is agitated at about room temperature.

5. A method as set forth in Claim 1 wherein is included the steps of allowing the final product to substantially equilibrate and hydrate prior to use in a food product.

6. A method as set forth in Claim 1 wherein only sufficient water is added to provide a final product having a distilled monoglyceride solids content of about 50% to about 58%.

7. A method as set forth in Claim 1 wherein only sufficient water is added to provide a final product having a solids to liquid ratio of about 56% distilled monoglyceride solids to liquid.

8. A method as set forth in Claim 1 wherein is included the step of providing a distilled monoglyceride composition having an iodine value of about 10 to about 29.

9. A method as set forth in Claim 1 wherein is included the step of providing a distilled monoglyceride composition having an iodine value of 22 ± 2.

10. A method as set forth in Claim 1 wherein is involved the step of providing a distilled monoglyceride composition having a monoester content of about 85% by weight.

11.  A method as set forth in Claim 1 wherein is included the step of adding an acidic preservative agent to the admixture.

12.  A method as set forth in Claim 1 wherein is included the step of adding a coemulsifier to the admixture.

13.  A method as set forth in Claim 1 wherein is included the step of providing a distilled monoglyceride composition having a melting point in the range of from about 135° F. to about 165° F.

14.  A method as set forth in Claim 1 wherein is included the step of providing a monoglyceride composition wherein the particle size is such that at least about 99% of the particles will pass through a 4 mesh screen.

15.  A method as set forth in Claim 1 wherein is included the step of providing a monoglyceride composition in the form of finely divided, substantially free flowing beads.

16.  A method as set forth in Claim 1 wherein is included the step of providing a monoglyceride composition wherein at least about 50% of the fatty acid moieties are $C_{16}$ or $C_{18}$ chains.

17.  A product made in accordance with the process of Claim 1.

18.   A product made in accordance with the process of Claims 1, 9 and 10.

19.   A product made in accordance with the process of Claims 1, 9 and 16.